# EUROPÄISCHE PATENTSCHRIFT

(11) **EP 4 327 397 B1**
(45) Veröffentlichungstag und Bekanntmachung des Hinweises auf die Patenterteilung: **16.07.2025**
(21) Anmeldenummer: 23703212.3
(22) Anmeldetag: 02.02.2023
(51) Int. Cl.: H01M 50/291, H01M 50/342

(54) **BATTERIEMODUL MIT MEHREREN BATTERIEEINZELZELLEN**
BATTERY MODULE HAVING MULTIPLE INDIVIDUAL BATTERY CELLS
MODULE DE BATTERIE AYANT DE MULTIPLES CELLULES DE BATTERIE INDIVIDUELLES

(30) Priorität: 10.02.2022 DE 102022000513
(43) Veröffentlichungstag der Anmeldung: 28.02.2024
(73) Patentinhaber: Mercedes-Benz Group AG, 70372 Stuttgart (DE)
(72) Erfinder: KUHN, Marius Yves, 72474 Winterlingen (DE); HUBER, Klaus, 73733 Esslingen (DE)
(74) Vertreter: Novagraaf Group
(86) Internationale Anmeldenummer: PCT/EP2023/052600
(87) Internationale Veröffentlichungsnummer: WO 2023/152028

(56) Entgegenhaltungen:
- EP-A2- 2 343 768
- DE-A1- 102019 216 606
- US-A1- 2013 280 559

## Beschreibung

Die Erfindung betrifft ein Batteriemodul mit mehreren Batterieeinzelzellen nach der im Oberbegriff von Anspruch 1 näher definierten Art.

Aus Batteriemodulen aufgebaute Batterien mit mehreren Batterieeinzelzellen sind soweit aus dem Stand der Technik bekannt. Eine typische Bauform für die Batterieeinzelzellen ist dabei die Ausgestaltung als sogenannte Rundzelle. Dies ermöglicht verschiedene Anordnungen. Die DE 10 2009 000 673 A1 beschreibt beispielsweise ein Batteriemodul, bei dem sich jeweils eine Mehrzahl von Rundzellen um einen Freiraum gruppieren. Bevorzugt kann dies in einer hexagonalen Anordnung erfolgen, wobei der Freiraum eine Füllung aus gut thermisch leitendem Material aufweisen kann oder auch als Kanal für den Durchfluss eines Kühlmediums ausgebildet sein kann. Ein weiterer Aufbau, bei dem mehrere der Batterieeinzelzellen in Form von Rundzellen hintereinander angeordnet sind und damit elektrisch miteinander verschaltet werden, ist beispielsweise auch aus der DE 10 2016 103 667 A1 bekannt.

Werden derartige Batteriemodule nun zur Bereitstellung von elektrischer Antriebsleistung in einem Fahrzeug eingesetzt, so weisen diese typischerweise eine relativ hohe Energiedichte auf. Nach heutigem Stand der Technik werden dafür häufig Lithium-Ionen-Zellen eingesetzt. Kommt es zu einem thermischen Problem innerhalb einer der Zellen, dann baut sich ein Überdruck auf und es kann zu einem sogenannten Thermal Runaway, also einem thermischen Durchgehen des gesamten Batteriemoduls, kommen. Um dem entgegenzuwirken weisen die Gehäuse der Batterieeinzelzellen Berstelemente auf, welche im Falle eines Überdrucks innerhalb der Batterieeinzelzelle das Gehäuse öffnen, um so den Überdruck abzubauen und den Elektrolyt aus der Batterieeinzelzelle zu entfernen. Damit kann ein thermisches Durchgehen im Idealfall auf eine oder wenige Zellen beschränkt werden, was hinsichtlich der Sicherheit einer aus derartigen Batteriemodulen aufgebauten Batterie ein entscheidender Vorteil ist.

Die dabei abgeblasenen heißen Gase, welche auch als Venting-Gase bezeichnet werden, können brennbar oder sogar explosiv sein. Ein Entzünden der Gase beispielsweise durch einen Kurzschluss oder einen Lichtbogen sollte daher nach Möglichkeit verhindert werden.

Die EP 2 557 615 A1 beschreibt eine Batterie für ein Kraftfahrzeug, welche aus mehreren einzelnen Modulen besteht. Innerhalb der Module sind einzelne Batteriezellen angeordnet. Diese weisen jeweils eine Einrichtung zur Stromunterbrechung (CID - Current Interruption Device) auf, um im Falle eines Druckanstiegs bei einem thermischen Durchgehen der Batterie den Stromfluss von der jeweiligen Batterieeinzelzelle zu unterbrechen.

Etwas Ähnliches beschreibt auch die JP 2011-135657 A. Diese geht in einem weiteren Ausführungsbeispiel auch dazu über, mehrere Einzelzellen zusammenzuschalten und jede dieser Serien von verschalteten Einzelzellen mit einer gemeinsamen CID zu versehen.

Die JP 2019-145490 A beschreibt eine Batterie, bei welcher mehrere runde Batterieeinzelzellen in einer gemeinsamen verschlossenen Röhre angeordnet werden.

Zum weiteren Stand der Technik kann außerdem auf die DE 10 2019 216 606 A1, die US 2013/0280559 A1, die DE 10 2017 212 223 A1 sowie auf die DE 10 2008 013 188 A1 verwiesen werden. Diese zeigen im Wesentlichen Einrichtungen zur Druckreduzierung in Batterieeinzelzellen, welche durch im Falle eines Druckanstiegs aufbrechende Berstelemente oder dergleichen für ein Abströmen des Überdrucks sorgen.

Die Aufgabe der hier vorliegenden Erfindung besteht nun darin, ein verbessertes Batteriemodul mit mehreren als Rundzellen ausgebildeten Batterieeinzelzellen anzugeben, welches einen sicheren Betrieb eines solchen Batteriemoduls ermöglicht.

Erfindungsgemäß wird diese Aufgabe durch ein Batteriemodul mit den Merkmalen im Anspruch 1, und hier insbesondere im kennzeichnenden Teil des Anspruchs 1, gelöst.

Vorteilhafte Ausgestaltungen und Weiterbildungen ergeben sich aus den hiervon abhängigen Unteransprüchen.

Das erfindungsgemäße Batteriemodul umfasst dabei mehrere als Rundzellen ausgebildete Batterieeinzelzellen, welche in mehreren Strängen hintereinander angeordnet sind. Die Rundzellen jedes einzelnen Strangs sind elektrisch in Reihe miteinander verschaltet, was beispielsweise durch die Ausbildung der becherförmigen Gehäuse jeder der Batterieeinzelzellen als Minuspol und nach vorn überstehender Pluspole erfolgen kann, sodass diese - ähnlich wie Batterien für die Anwendung in Kleingeräten - hintereinander gelegt und dadurch in Reihe verschaltet werden können. Erfindungsgemäß ist es so, dass jeder der Stränge in einem verschlossenen rohrförmigen Volumen angeordnet ist. Dabei ist eine Einrichtung zum Durchtrennen der elektrischen Kontaktierung wenigstens eines Strangs im Falle eines unerlaubten Druckanstiegs in wenigstens einer der Batterieeinzelzellen in dem rohrförmigen Volumen des Strangs vorgesehen. Kommt es also zu einer Thermal Propagation oder einem Thermal Runaway in einer der Batterieeinzelzellen, erfolgt typischerweise ein Druckanstieg in dieser Zelle. Ein Berstelement im Becher der Zelle wird dann ab einem kritischen Grenzdruck aufreißen und die Venting-Gase strömen aus der Batterieeinzelzelle aus. Diese gelangen dann in das rohrförmige Volumen des betroffenen Strangs und führen dort zu einem Druckanstieg.

In dem erfindungsgemäßen Batteriemodul ist es nun so, dass über die Einrichtung zum Durchtrennen der elektrischen Kontaktierung des Strangs im Falle eines solchen unerlaubten Druckanstiegs dieser Strang elektrisch von den weiteren Strängen des Batteriemoduls sowie gegebenenfalls weiteren die Batterie ausbildenden Batteriemodulen getrennt wird. Hierdurch wird auf einem relativ niedrigen Spannungsniveau, welcher sich lediglich durch die Anzahl der Batterieeinzelzellen innerhalb des Strangs definiert, der Strompfad unterbrochen. Damit wird die potenziell bereitstehende Zündspannung, um die Venting-Gase zu entzünden, deutlich reduziert, was einen entscheidenden Sicherheitsvorteil darstellt.

Bei dem erfindungsgemäßen Batteriemodul ist wenigstens eine elektrische Kontaktplatte ausgebildet, welche zumindest zwei der Stränge elektrisch kontaktiert. Die Stränge lassen sich dabei innerhalb des Moduls je nach Anzahl der Stränge unterschiedlich verschalten. So können sie beispielsweise alle parallel oder alle in Reihe verschaltet werden oder sie können in Gruppen parallel bzw. in Reihe verschaltet werden, wobei diese Gruppen untereinander dann wiederum in Reihe bzw. parallel geschaltet werden. All dies kann über eine oder mehrere elektrische Kontaktplatten erfolgen, welche vorzugsweise am Ende und am Anfang der entsprechenden rohrförmigen Volumina und der darin angeordneten Stränge der Batterieeinzelzellen angeordnet sind.

Dabei ist es ferner vorgesehen, dass zwischen den Batterieeinzelzellen der Reihe und der Wand des rohrförmigen Volumens wenigstens ein Strömungskanal ausgebildet ist. Ein solcher Strömungskanal stellt sicher, dass aus einer der Batterieeinzelzellen austretende Gase sicher und zuverlässig innerhalb des rohrförmigen Volumens geleitet werden und beispielsweise am Anfang oder am Ende des rohrförmigen Volumens bei einem dort angeordneten Berstelement ankommen, ohne zuvor das rohrförmige Volumen zu verformen. Derartige Kanäle können beispielsweise durch eine gerippte Oberfläche der Wand des rohrförmigen Volumens geschaffen werden.

Gemäß der Erfindung ist diese diese Kontaktplatte als Berstelement ausgebildet ist. Die elektrische Kontaktplatte ist so mit einem Gehäuse des Batteriemoduls verbunden, dass diese im Falle eines Überdrucks abgesprengt wird. Dadurch wird einerseits die Druckentlastung innerhalb des rohrförmigen Volumens ermöglicht und andererseits die elektrische Kontierung aller mit der jeweiligen Platte kontaktierten Stränge innerhalb des Batteriemoduls getrennt. Ergänzend oder alternativ hierzu kann auch ein Aktuator vorhanden sein, um die Kontaktplatte zu entfernen, beispielsweise um diese über eine Pyroladung abzusprengen, wenn über einen Sensor direkt oder mittelbar ein Druckanstieg erkannt worden ist.

Die Einrichtung kann dabei in einer vorteilhaften Ausgestaltung der Erfindung eine Detektionsvorrichtung zum zumindest mittelbaren Erfassen des Druckanstiegs und wenigstens einen dadurch ausgelösten Aktuator aufweisen. Der Druck kann also direkt oder mittelbar erfasst werden, wodurch ein Aktuator ausgelöst werden kann. Dies kann beispielsweise das Auslösen einer Pyrosicherung sein, um die elektrische Kontaktierung zu trennen bzw. ein Kontaktelement von dem Strang der Batterieeinzelzellen abzusprengen.

Bei dieser Variante mit einem direkten oder mittelbaren Drucksensor entsteht der weitere Vorteil, dass ein Öffnen der Strompfade bereits möglich wird, noch bevor der Druck soweit angestiegen ist, dass Venting-Gase freigesetzt werden, welche sich dann gegebenenfalls entzünden können. Das Risiko einer Entzündung der Venting-Gase wird damit zusätzlich verringert.

Gemäß einer weiteren sehr günstigen Ausgestaltung des erfindungsgemäßen Batteriemoduls kann es dabei ferner vorgesehen sein, dass die Einrichtung ein Berstelement aufweist, wobei dieses die elektrische Kontaktierung ausbildet oder ein diese ausbildender Leiter über das Berstelement verläuft. Dieses Berstelement für das rohrförmige Volumen des betroffenen Strangs wird also bei einem kritischen Überdruck selbsttätig aufreißen, um so den Überdruck in die Umgebung, vorzugsweise entlang eines vorgegebenen sicheren Venting-Pfads, zu entlassen. Mit dem Aufreißen des Berstelements wird bei dieser Ausgestaltung der Einrichtung gleichzeitig die elektrische Kontaktierung zerstört, entweder indem diese durch das Berstelement selbst ausgebildet wird oder indem ein Leiter über die Sollbruchstelle des Berstelements verläuft, welcher beim Ansprechen des Berstelements zerstört wird, um den Strompfad zu unterbrechen.

Gemäß einer außerordentlich günstigen Weiterbildung des erfindungsgemäßen Batteriemoduls kann es auch vorgesehen sein, dass der Strömungskanal durch ein spiralförmiges Umwickeln der Batterieeinzelzellen mit einem flexiblen Material wie beispielsweise einem Draht oder einer Litze oder auch einem elastischen Rundmaterial oder Band aus Elastomer, Kunststoff oder dergleichen erfolgt. Werden diese dann zusammen in das rohrförmige Volumen eingebracht, bildet sich ein spiralförmiger Kanal aus. Bei einem ausreichend flexiblen Material wie beispielsweise einer Gummilitze mit ovalem oder rundem Querschnitt kann gleichzeitig eine sichere Fixierung der Batterieeinzelzellen innerhalb des rohrförmigen Volumens gewährleistet werden, ohne deren potenzielle Bewegung beim Laden und Entladen, bei welchem die Batterieeinzelzellen hinsichtlich ihres Durchmessers etwas größer und etwas kleiner werden, zu behindern.

Das wenigstens eine rohrförmige Volumen kann dabei gemäß einer außerordentlich günstigen Weiterbildung des erfindungsgemäßen Batteriemoduls benachbart zu einem von einem Kühlmedium durchströmten Kanal angeordnet sein. Insbesondere kann es sich dabei um eine vollständige oder teilweise hexagonale Anordnung von mehreren derartigen rohrförmigen Volumina um den Kühlmedienkanal handeln.

Der Kühlmedienkanal kann über eine Druck- und/oder Schmelzsicherung aus einem im Falle des thermischen Durchgehens aufbrechenden und/oder aufschmelzenden Material mit dem Kühlkanal verbunden sein. Hierdurch würde ein Ableiten von Venting-Gasen nicht (nur) beispielsweise in das Gehäuse um mehrere derartige Batteriemodule erfolgen, sondern in den Kühlmedienkanal, sodass die Venting-Gase gezielt abgekühlt und mit dem Kühlmedium abgeführt werden können.

Neben einem solchen definierten Venting-Pfad über das Kühlmedium kann durch ein gezieltes anordnen der Berststelle/Sollbruchstelle an jeweils einem Ende des rohrförmigen Volumens auch ein Venting-Kanal aus dem Batteriemodul heraus in ein das Batteriemodul gemäß einer sehr vorteilhaften Ausgestaltung umgebendes Batteriegehäuse erfolgen, aus welchem die Gase dann in an sich bekannter Art und Weise, typischerweise über ein weiteres Berstelement und einen Venting-Kanal, ganz gezielt in einen unkritischen Bereich außerhalb der Batterie abgeleitet werden können.

Weitere vorteilhafte Ausgestaltungen des erfindungsgemäßen Batteriemoduls ergeben sich auch aus den weiteren abhängigen Unteransprüchen und werden anhand des Ausführungsbeispiels deutlich, welches nachfolgend unter Bezugnahme auf die Figuren näher beschrieben ist.

Dabei zeigen:
- Fig. 1: eine schematische Anordnung eines Teils eines Batteriemoduls gemäß der Erfindung im regulären Betrieb;
- Fig. 2: eine Darstellung analog zu der in Fig. 1 im Falle eines thermischen Ereignisses in einem ersten Ausführungsbeispiel;
- Fig. 3: eine Darstellung analog zu der in Fig. 1 im Falle eines thermischen Ereignisses in einem zweiten Ausführungsbeispiel;
- Fig. 4: eine schematische Darstellung eines Berstelements in dem Batteriemodul gemäß der Erfindung im regulären Betrieb;
- Fig. 5: eine Darstellung analog zu der in Fig. 4 im Falle eines thermischen Ereignisses; und
- Fig. 6: eine Draufsicht auf eine Batterie mit mehreren erfindungsgemäßen Batteriemodulen.

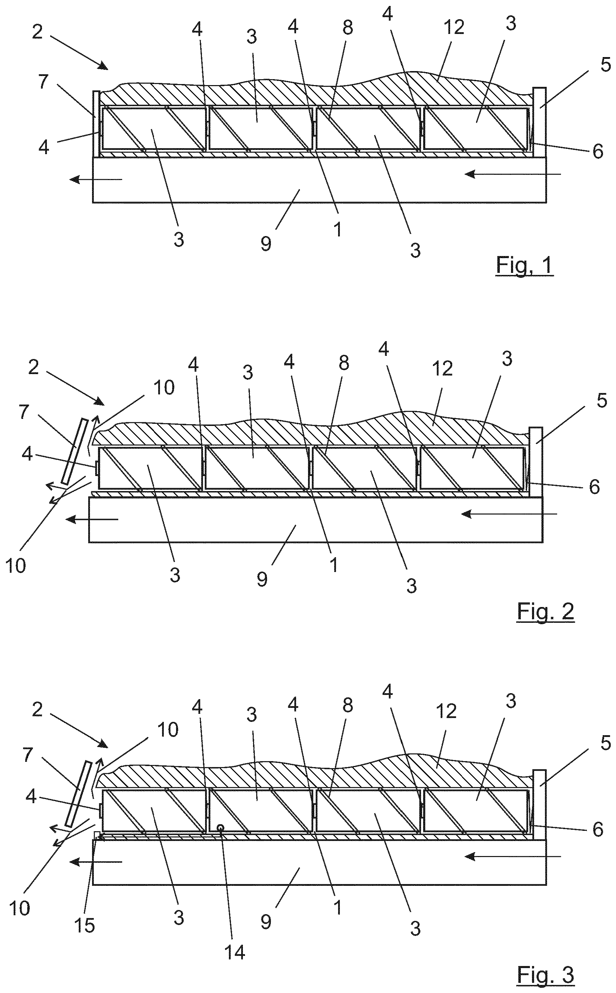

In der Darstellung der Figur 1 ist schematisch angedeutet ein rohrförmiges Volumen 1 eines Batteriemoduls 2 zu erkennen. In diesem rohrförmigen Volumen 1 sind in Reihe hintereinander in dem hier dargestellten Ausführungsbeispiel vier Batterieeinzelzellen 3 angeordnet. Sie sind elektrisch in Reihe miteinander verschaltet, beispielsweise indem ihre becherförmigen Gehäuse den negativen Batteriepol ausbilden und ein positiver Batteriepol 4 in der Darstellung der Figur 1 die Batterieeinzelzellen 3 auf ihrer linken Seite ausgebildet ist. Werden die Batterieeinzelzellen 3 nun hintereinander in das rohrförmige Volumen 1 eingebracht und miteinander verpresst, beispielsweise durch eine negative Kontaktplatte 5 sowie eine Feder 6 auf der rechten Seite und eine positive Kontaktplatte 7 auf der linken Seite, dann werden die Batterieeinzelzellen 3 in Reihe miteinander verschaltet und eine ihrer Anzahl entsprechende Spannung liegt zwischen den beiden Kontaktplatten 5, 7 an.

Für den Fall, dass eine der Batterieeinzelzellen 3 dieses Strangs an Batterieeinzelzellen 3 thermisch durchgeht und Venting-Gase sich in den Bereich des rohrförmigen Volumens 1 entleeren, sind die Batterieeinzelzellen 3 in dem hier dargestellten Ausführungsbeispiel mit einem schnurförmigen Element 8 spiralförmig umwickelt, um so einen spiralförmigen Pfad für eventuelle Venting-Gase zu schaffen. Die Schnur 8, welche beispielsweise als Gummischnur, als Draht, als Litze oder dergleichen ausgebildet sein kann, hält die Batterieeinzelzellen 3 außerdem in dem rohrförmigen Volumen 1 sicher in ihrer Position und erlaubt gleichzeitig ein gewisses Atmen der Batterieeinzelzellen 3, womit die Volumenvergrößerung und -verkleinerung beim Laden und Entladen bezeichnet wird. Benachbart zu dem rohrförmigen Volumen 1 ist in der Darstellung der Figur 1 außerdem ein Kühlmedienkanal 9 angedeutet, welcher entsprechend der Pfeile von einem flüssigen oder ggf. auch gasförmigen Kühlmedium durchströmt wird, um im Bereich der Batterieeinzelzellen 3 anfallende Abwärme zuverlässig abzuführen.

Kommt es nun zu dem bereits angesprochenen thermischen Ereignis in einer der Batterieeinzelzellen 3 innerhalb des rohrförmigen Volumens 1, dann wird sich der entstehende Überdruck der Venting-Gase in dem Volumen 1 ausbreiten. Das rohrförmige Volumen 1 weist im Bereich seiner positiven Kontaktplatte 7 nun beispielsweise Sollbruchstellen oder Berstelemente auf, welche in einem solchen Fall aufreißen und einen Venting-Pfad für die Gase freigeben. Dies ist in der Darstellung der Figur 2 durch die mittels einer Sollbruchstelle mit einem Gehäuse 12 des Batteriemoduls 2 verbundenen Kontaktplatte 7 angedeutet. Diese kann z.B. so mit dem Gehäuse 12 verklebt sein, dass sie sich im Falle eines kritischen Überdrucks in dem Volumen 1 löst. Die über die Pfeile 10 symbolisierten Venting-Gase werden dann beispielsweise in ein hier nicht dargestelltes Batteriegehäuse abgegeben und aus diesem gezielt in einen unkritischen Bereich abgeleitet.

Durch das Absprengen der positiven Kontaktplatte 7 kommt es zu einer Druckentlastung. Gleichzeitig wird so aber auch die elektrische Kontaktierung des Strangs der Batterieeinzelzellen 3 in dem rohrförmigen Volumen 1 unterbrochen wird. Die Spannung wird dabei auf einem relativ niedrigen Niveau unterbrochen, da hier lediglich die Spannung der innerhalb dem Volumen 1 befindlichen Batterieeinzelzellen 3 vorliegt. Damit wird die potenziell bereitstehende Zündspannung zum Entzünden der Venting-Gase reduziert, was die Sicherheit steigert.

Im Prinzip reicht es dabei aus den betroffenen Strang der Batterieeinzelzellen 3 mit der thermisch durchgehenden Zelle 3 aus dem Strompfad zu nehmen. Zu bevorzugen ist jedoch die Trennung aller Strompfade innerhalb des Batteriemoduls 2, wenn mehrere Stränge von Batterieeinzelzellen 3 vorhanden sind. Dies lässt sich ideal durch ein Absprengen der gesamten Kontaktplatte 7 realisieren.

In Figur 3 ist analog zur Darstellung in Figur 2 eine alternative Ausführungsvariante gezeigt. Anstelle eines Absprengens der Kontaktplatte 7 einerseits zur Druckentlastung des rohrförmigen Volumens 1 und andererseits zur Trennung der elektrischen Kontaktierung der Batterieeinzelzellen 3 des Strangs ist hier ein Drucksensor 14 zu erkennen, welcher mit einem Aktuator 15, beispielsweise einer Pyroladung, in Verbindung steht, um im Falle eines Druckanstiegs die Kontaktplatte 7 abzusprengen oder ihr Absprengen durch die Kräfte des Druckanstiegs zu unterstützen.

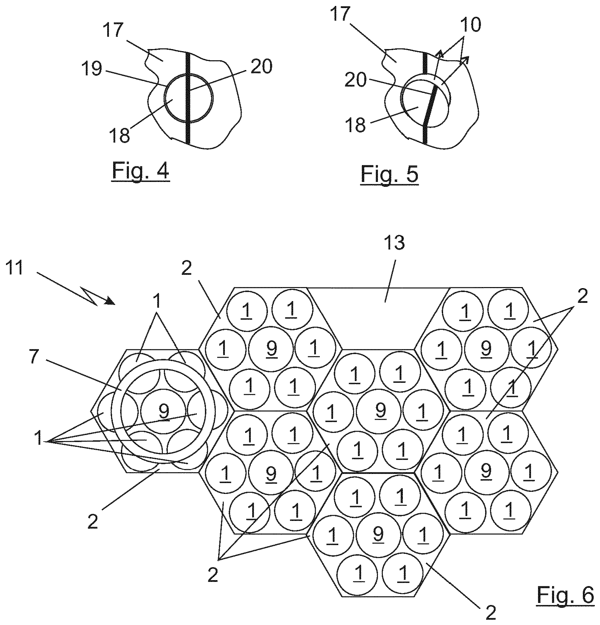

Eine weitere passive Möglichkeit im Wesentlichen analog zu der in Figur 2 beschriebenen Variante, bei welcher die Kontaktplatte 7 gänzlich abgesprengt wird, ist in den Darstellungen der Figuren 4 und 5 zu erkennen. In Figur 4 ist dabei der unzerstörte Zustand zu erkennen. An die Stelle der elektrischen Kontaktplatte 7 in der Darstellung der Figur 2 tritt hier eine elektrisch nicht leitende Verschlussplatte 17, welche das rohrförmige Volumen 1 verschließt. Diese elektrisch nicht leitende Verschlussplatte 17 weist ein mit 18 bezeichnetes Berstelement auf, welches hier als über eine Sollbruchstelle 19 angebundene Scheibe ausgestaltet ist. Über das Berstelement 18 verläuft dabei ein elektrischer Leiter 20, über welchen der entsprechende zugeordnete Strang der Batterieeinzelzellen 3 elektrisch kontaktiert ist. In der Darstellung der Figur 5 ist nun der Fall gezeigt, bei welchem der Druckanstieg innerhalb des rohrförmigen Volumens 1 bereits stattgefunden hat. Die Scheibe des Berstelements 18 ist entlang der Sollbruchstelle 19 aufgerissen. Wie durch die beiden wiederum mit 10 bezeichneten Pfeile angedeutet, strömt Venting-Gas aus der durch das Aufreißen des Berstelements 18 entstandenen Öffnung ab. Gleichzeitig mit dem Aufreißen des Berstelements 18 wird auch der elektrische Leiter 20 zerstört, sodass die zuvor über ihn hergestellte elektrische Kontaktierung der Batterieeinzelzellen 3 des Strangs unterbrochen wird. Im Gegensatz zum Einsatz eines Sensors ist dieser Aufbau ähnlich wie der in Figur 2 beschriebene Aufbau rein passiv wirkend.

In der Darstellung der Figur 6 ist nun eine Gesamtbatterie 11 zu erkennen, welche aus mehreren derartigen Batteriemodulen 2 aufgebaut ist. Jedes der Batteriemodule 2 umfasst dabei den Kühlkanal 9, welcher hier zentral innerhalb einer hexagonalen Anordnung von sechs der rohrförmigen Volumina 1, welche dann mit den Batterieeinzelzellen 3 entsprechend bestückt werden, angeordnet ist. Alternativ dazu wären auch sieben Volumina 1 mit Batterieeinzelzellen 3 denkbar, wenn auf den Kühlkanal verzichtet werden kann, weil die Kühlung unnötig ist, zwischen den Volumina 1 angeordet ist oder z.B. über eine der Kopfplatten 5, 7 erfolgt. Jedes der Batteriemodule 2 kann eine einzelne positive Kontaktplatte 7 auf der einen Seite und negative Kontaktplatte auf der anderen Seite aufweisen, welche die Möglichkeit bietet, im Falle einer Thermal Propagation, also eines thermischen Durchgehens der Batteriezellen 3 in einem der Volumen 1 abgesprengt zu werden, um das Batteriemodul 2 bzw. die in ihm verbauten Batterieeinzelzellen 3 elektrisch auf einer relativ niedrigen Spannungsebene der Reihenschaltung innerhalb jedes der rohrförmigen Volumen 1 zu trennen.

In dem ganz links dargestellten Batteriemodul 2 ist dabei rein beispielhaft eine ringförmige Kontaktplatte 7 angedeutet, über welche eine elektrische Parallelschaltung aller Stränge von Batterieeinzelzellen 3 in den rohrförmigen Volumina 1 erfolgen kann. Wird diese im Falle des Überdrucks in einem oder mehreren der rohrförmigen Volumina 1 abgesprengt, werden alle Stränge von Batterieeinzelzellen 3 elektrisch getrennt, sodass das gesamte Batteriemodul 2 elektrisch abgeschaltet ist.

Um den Aufbau an ein hier nicht dargestelltes die einzelnen Batteriemodule 2 umgebendes Batteriegehäuse anzupassen können Hohlräume vorgesehen sein, welche beispielsweise durch - nicht dargestellte - halbe Batteriemodule mit lediglich drei der Volumen 1 und einem halben Kühlkanal 9 gefüllt werden können, oder welche beispielsweise wie es hier durch den mit 13 bezeichneten Raum angedeutet ist Elektronikkomponenten wie ein Batteriemanagementsystem oder elektrische Komponenten wie elektrische Anschlüsse für die Gesamtbatterie 11 aufweisen können.

## Patentansprüche

1. Batteriemodul (2) mit mehreren als Rundzellen ausgebildeten Batterieeinzelzellen (3), welche in mehreren Strängen hintereinander angeordnet und elektrisch innerhalb des jeweiligen Strangs in Reihe verschaltet sind,
**dadurch gekennzeichnet, dass**
jeder der Stränge in einem verschlossenen rohrförmigen Volumen (1) angeordnet ist, wobei eine Einrichtung zum Durchtrennen der elektrischen Kontaktierung wenigstens eines Strangs im Falle eines unerlaubten Druckanstiegs in wenigstens einer der Batterieeinzelzellen (3) innerhalb des rohrförmigen Volumens (1) dieses Strangs vorgesehen ist, wozu wenigstens eine elektrische Kontaktplatte (5, 7) ausgebildet ist, welche zumindest zwei der Stränge elektrisch kontaktiert, wobei die elektrische Kontaktplatte (7) als Berstelement ausgebildet ist oder ein Aktuator (15) vorgesehen ist, welcher dazu eingerichtet ist, im Falle einer Ansteuerung die elektrische Kontaktplatte (7) von den Strängen zu trennen, und wobei zwischen den Batterieeinzelzellen (3) des jeweiligen Strangs und dem das rohrförmige Volumen (1) umgebenden Material (12) wenigstens ein Strömungskanal ausgebildet ist.

2. Batteriemodul (2) nach Anspruch 1,
**dadurch gekennzeichnet, dass**
die Einrichtung eine Detektionsvorrichtung (14) zum zumindest mittelbaren Erfassen des Druckanstiegs und wenigstens einen dadurch ausgelösten Aktuator (15) aufweist.

3. Batteriemodul (2) nach Anspruch 1 oder 2,
**dadurch gekennzeichnet, dass**
die Einrichtung ein Berstelement (18) aufweist, wobei dieses die elektrische Kontaktierung ausbildet oder ein diese elektrische Kontaktierung ausbildender Leiter (20) über das Berstelement (18) verläuft.

4. Batteriemodul (2) nach einem der Ansprüche 1 bis 3,
**dadurch gekennzeichnet, dass**
der Strömungskanal durch ein spiralförmiges Umwickeln der Batterieeinzelzellen (3) mit einem flexiblen Material (8) vor dem Einbringen in das rohrförmige Volumen (1) realisiert ist.

5. Batteriemodul (2) nach einem der Ansprüche 1 bis 4,
**dadurch gekennzeichnet, dass**
die rohrförmigen Volumina (1) benachbart zu einem Kühlmedienkanal (9) angeordnet sind, wobei sich vorzugsweise mehrere der rohrförmigen Volumina (1) um einen Kühlmedienkanal (9) gruppieren.

6. Batteriemodul (2) nach Anspruch 5,
**dadurch gekennzeichnet, dass**
die rohrförmigen Volumina (1) in einer vollständigen oder teilweise hexagonalen Anordnung um den Kühlmedienkanal (9) gruppiert sind.

7. Batteriemodul (2) nach einem der Ansprüche 5 oder 6,
**dadurch gekennzeichnet, dass**
der Kühlmedienkanal (9) über ein Druck - und/oder Schmelzsicherung mit zumindest einem der rohrförmigen Volumina (1) verbunden ist.

8. Batteriemodul (2) nach einem der Ansprüche 3 bis 7,
**dadurch gekennzeichnet, dass**
über das Berstelement ein Pfad für austretende Gase (10) in ein das Batteriemodul (2) umgebendes Gehäuse einer Batterie (11) freigebar ist.

## Claims

1. Battery module (2) comprising a plurality of individual battery cells (3) designed as round cells, which individual battery cells are arranged one behind the other in a plurality of branches and are electrically connected in series within the relevant branch,
**characterized in that**
each of the branches is arranged in a closed tubular volume (1), wherein an apparatus is provided for severing the electrical contact of at least one branch in the event of an unauthorized increase in pressure in at least one of the individual battery cells (3) within the tubular volume (1) of this branch, for which purpose at least one electrical contact plate (5, 7) is formed, which electrically contacts at least two of the branches, wherein the electrical contact plate (7) is designed as a rupture element, or an actuator (15) is provided which is designed to separate the electrical contact plate (7) from the branches in the event of an actuation, and wherein at least one flow channel is formed between the individual battery cells (3) of the relevant branch and the material (12) surrounding the tubular volume (1).

2. Battery module (2) according to claim 1,
**characterized in that**
the apparatus has a detection device (14) for at least indirectly detecting the pressure increase, and at least one actuator (15) which is triggered thereby.

3. Battery module (2) according to claim 1 or claim 2,
**characterized in that**
the apparatus has a rupture element (18), wherein this forms the electrical contact, or a conductor (20) forming this electrical contact extends across the rupture element (18).

4. Battery module (2) according to any of claims 1 to 3,
**characterized in that**
the flow channel is provided by helically wrapping the individual battery cells (3) with a flexible material (8) before introduction into the tubular volume (1).

5. Battery module (2) according to any of claims 1 to 4,
**characterized in that**
the tubular volumes (1) are arranged adjacent to a cooling media channel (9), wherein preferably a plurality of the tubular volumes (1) are grouped around a cooling media channel (9).

6. Battery module (2) according to claim 5,
**characterized in that**
the tubular volumes (1) are grouped in a completely or partially hexagonal arrangement around the cooling media channel (9).

7. Battery module (2) according to either claim 5 or claim 6,
**characterized in that**
the cooling media channel (9) is connected to at least one of the tubular volumes (1) via a pressure release device and/or a fuse.

8. Battery module (2) according to any of claims 3 to 7,
**characterized in that**
a path for escaping gases (10) can be opened into a housing of a battery (11) surrounding the battery module (2) by means of the rupture element.

## Revendications

1. Module de batterie (2) comportant plusieurs cellules individuelles de batterie (3) réalisées sous forme de cellules rondes, lesquelles sont disposées les unes derrière les autres en plusieurs branches et sont connectées électriquement en série à l'intérieur de la branche respective, **caractérisé en ce que**
chacune des branches est disposée dans un volume tubulaire (1) fermé, dans lequel un appareil est prévu pour permettre de sectionner le contact électrique d'au moins une branche en cas d'augmentation de pression non autorisée dans au moins l'une des cellules individuelles de batterie (3) à l'intérieur du volume tubulaire (1) de ladite branche, au moins une plaque de contact électrique (5, 7) étant réalisée à cet effet, laquelle établit un contact électrique avec au moins deux des branches, dans lequel la plaque de contact électrique (7) est réalisée comme un élément de rupture, ou un actionneur (15) est prévu, lequel est configuré pour séparer la plaque de contact électrique (7) des branches en cas de commande, et dans lequel au moins un canal d'écoulement est réalisé entre les cellules individuelles de batterie (3) de la branche respective et le matériau (12) entourant le volume tubulaire (1).

2. Module de batterie (2) selon la revendication 1,
**caractérisé en ce que**
l'appareil présente un dispositif de détection (14) permettant de détecter au moins indirectement l'augmentation de pression et au moins un actionneur (15) déclenché par celle-ci.

3. Module de batterie (2) selon la revendication 1 ou 2,
**caractérisé en ce que**
l'appareil présente un élément de rupture (18), dans lequel celui-ci réalise le contact électrique ou un conducteur (20) réalisant ledit contact électrique s'étend sur l'élément de rupture (18).

4. Module de batterie (2) selon l'une des revendications 1 à 3,
**caractérisé en ce que**
le canal d'écoulement est créé par un enroulement en spirale des cellules individuelles de batterie (3) avec un matériau flexible (8) avant l'introduction dans le volume tubulaire (1).

5. Module de batterie (2) selon l'une des revendications 1 à 4,
**caractérisé en ce que**
les volumes tubulaires (1) sont disposés de manière adjacente à un canal de milieu de refroidissement (9), dans lequel plusieurs des volumes tubulaires (1) sont de préférence regroupés autour d'un canal de milieu de refroidissement (9).

6. Module de batterie (2) selon la revendication 5,
**caractérisé en ce que**
les volumes tubulaires (1) sont regroupés autour du canal de milieu de refroidissement (9) dans une disposition entièrement ou partiellement hexagonale.

7. Module de batterie (2) selon l'une des revendications 5 à 6,
**caractérisé en ce que**
le canal de milieu de refroidissement (9) est raccordé à au moins un des volumes tubulaires (1) par l'intermédiaire d'un coupe-circuit à gaz et/ou à fusible.

8. Module de batterie (2) selon l'une des revendications 3 à 7,
**caractérisé en ce que**
un chemin pour des gaz (10) sortant dans un boîtier d'une batterie (11) entourant le module de batterie (2) peut être dégagé par l'intermédiaire de l'élément de rupture.
